# EUROPEAN PATENT APPLICATION

(11) **EP 4 557 123 A1**
(43) Date of publication of application: **21.05.2025**
(21) Application number: 24210944.5
(22) Date of filing: 05.11.2024
(51) Int. Cl.: G06F 16/332, G06F 16/9032, G06F 16/9532

(54) **LEVERAGING GENERATIVE ARTIFICIAL INTELLIGENCE TO IDENTIFY PRODUCTS FOR COMPLETING A TASK DEFINED BY A SEARCH QUERY**

(30) Priority: 15.11.2023 US 202318510233
(71) Applicant: eBay Inc., San Jose, CA 95125 (US)
(72) Inventor: NAYAK, Barsa, SAN JOSE (US)
(74) Representative: Müller-Boré & Partner Patentanwälte PartG mbB

(57) **Abstract**

Generative artificial intelligence (AI) is leveraged by a search engine to identify products for completing a task defined by a search query. A user having a problem or task at hand initially enters a search query comprising intent or context describing the problem or task. Rather than executing a search based on the search query, the search engine determines the search query is an intent-based query. The search engine may further determine the search query is not a cached query. The search query is provided to a generative AI model and a list of items corresponding to a task defined by the search query is generated. The list of items may be provided as a search suggestion for the user. The user may select a portion of items from the list of items and a search is executed.

## Description

### BACKGROUND

Many product search systems allow users to submit search queries consisting of a few words or terms. The search systems return a list of relevant items related to the search queries based on keyword search that are available within a corresponding site. If the search terms do not match an item title or item description, the search systems may not return appropriate results.

### SUMMARY

At a high level, aspects described herein relate to intent-based searches. More particularly, aspects described herein relate to a search engine that leverages generative artificial intelligence (Al) to identify products for completing a task defined by a search query. In accordance with aspects of the technology described herein, a search query is received at a search engine. Based on determining the search query is an intent-based query, the search query is provided to a generative AI model. A list of items corresponding to a task defined by the search query is received at the search engine. The search engine executes a search for at least a portion of the list of items and search results are provided to the user.

The Summary is intended to introduce a selection of concepts in a simplified form that is further described in the Detailed Description of this disclosure. The Summary is not intended to identify key or essential features of the claimed subject matter, nor is it intended to be used as an aid in determining the scope of the claimed subject matter. Additional objects, advantages, and novel features of the technology will be provided, and in part will become apparent to those skilled in the art upon examination of the disclosure or learned through practice of the technology.

### BRIEF DESCRIPTION OF THE DRAWINGS

The patent or application file contains at least one drawing executed in color. Copies of this patent or patent application publication with color drawing(s) will be provided by the Office upon request and payment of the necessary fee. The present technology is described in detail below with reference to the attached drawing figures, wherein:
FIG. 1 is a block diagram of an example operating environment suitable for implementing aspects of the technology;
FIG. 2 is an example user interface showing search results before the search system leverages generative AI, according to an aspect of the technology described herein;
FIG. 3 is an example user interface showing search results after the search system leverages generative Al, according to an aspect of the technology described herein;
FIG. 4 is an example user interface showing search results before the search system leverages generative Al, according to an aspect of the technology described herein;
FIG. 5 is an example user interface showing search results after the search system leverages generative AI, according to an aspect of the technology described herein;
FIG. 6 is a flow diagram showing a method for leveraging generative AI to identify products for completing a task, in accordance with an aspect of the technology described herein;
FIG. 7 is a flow diagram showing a method for leveraging generative AI to identify products for completing a task, in accordance with an aspect of the technology described herein; and
FIG. 8 is an example computing device suitable for implementing the described technology, in accordance with an aspect described herein.

### DETAILED DESCRIPTION

The subject matter of aspects of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

In addition, words such as "a" and "an," unless otherwise indicated to the contrary, may also include the plural as well as the singular. Thus, for example, the constraint of "a feature" is satisfied where one or more features are present. Furthermore, the term "or" includes the conjunctive, the disjunctive, and both (*a* or *b* thus includes either *a* or *b*, as well as *a* and *b*).

While search engines are an incredibly useful tool for providing search results for received search queries, shortcomings in existing search technologies often result in the consumption of an unnecessary quantity of computing resources (e.g., I/O costs, network packet generation costs, throughput, memory consumption, etc.). When performing searches, users are often seeking particular search results For instance, in the context of product-based search, a user may be seeking a particular item that has a particular style, design, or color. However, in the context of an intent-based search, the user may be seeking a number of items (some of which may not be known to the user) to perform a particular task. In this context, existing search technologies are unable to understand the intent of the user and the search results are not helpful, which then requires the user to submit additional search queries or multiple filters to obtain the desired search results pertaining to the items needed to perform the task.

For example, a search engine may receive a text-based query of "fix torn clothes." Because the search system is unable to understand the intent of the user, the search system returns results that include items (e.g., clothes) available within the e-commerce site. However, in this example, the user is searching for items to actually fix torn clothes (e.g., iron-on patches, fabric glue, sewing kit, fabric tape, etc.) and the results provided are not helpful. In another example, a search engine may receive a text-based query of "essentials for a trip." Because the search system is unable to understand the intent of the user, and the search system returns results for items available within the site with a title or description matching the search terms (e.g., a book with the terms "essential," "for a," and "trip" in the title or description). However, in this example, the user is searching for items needed for a trip (e.g., backpack, sleeping bag, sunscreen, camera, etc.) and, again, the results provided are not helpful.

This requires the user to perform multiple searches to figure out the items actually needed to perform the task at hand and multiple searches to find those items available for purchase. This process unnecessarily consumes various computing resources of the search system, such as processing power, network bandwidth, throughput, memory consumption, etc. In some instances, the multiple attempts to identify items needed to perform the task may even completely fail to satisfy the user's goal, thus requiring the user to spend even more time and computing resources on the search process by repeating the process of issuing additional queries until the user finally accesses the desired content items. In some cases, the user may even give up searching because the search engine was not able to return desired search results after multiple searches.

These shortcomings of existing search technologies adversely affect computer network communications. For example, each time a query is received, contents or payload of the search queries is typically supplemented with header information or other metadata, which is multiplied by all the additional queries needed to obtain the particular items the user desires to complete a task. As such, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if multiple users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time.

Aspects of the technology described herein improve the functioning of the computer itself in light of these shortcomings in existing search technologies by providing a solution that enables a search engine to provide enhanced search accuracy by leveraging generative Al, enabling a user to purchase items to complete a task with a single search query. The list of items is generated from the text query utilizing a machine learning model. As can be appreciated, better results are achieved compared to traditional search engines that require multiple search queries from the user.

Aspects of the technology described herein provide a number of improvements over existing search technologies. For instance, computing resource consumption is improved relative to existing technologies. In particular, the search accuracy is enhanced by leveraging generative AI for intent-based queries, thereby allowing the user to more quickly access relevant search results. This eliminates (or at least reduces) the repetitive user queries and filter selections because the search results comprise a list of items to complete the task the user is seeking. Accordingly, aspects of the technology described herein decrease computing resource consumption, such as processing power and network bandwidth. For instance, a user query (e.g., an HTTP request), would only need to traverse a computer network once (or fewer times relative to existing technologies).

In like manner, aspects of the technology described herein improve storage device or disk I/O and query execution functionality. As described above, the inadequate search results provided by existing search technologies results in repetitive user queries and filter selections. This causes multiple traversals to disk I/O. In contrast, aspects described herein reduce storage device I/O because the user provides a reduced amount of inputs so the computing system does not have to reach out to the storage device as often to perform a read or write operation. For example, by leveraging generative AI, the search engine can respond with enhanced search results enabling a user to purchase items to complete a task with a single search query. Accordingly, there is not as much wear due to query execution functionality.

Having briefly described an overview of aspects of the technology described herein, an exemplary operating environment in which aspects of the technology described herein may be implemented is described below.

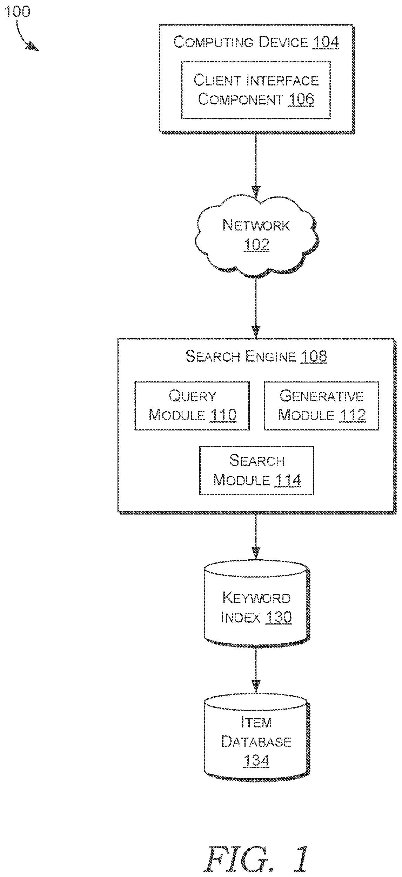

Turning now to FIG. 1, a block diagram is provided showing an operating environment 100 in which aspects of the present disclosure may be employed. It should be understood that this and other arrangements described herein are set forth only as examples. Other arrangements and elements (e.g., machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

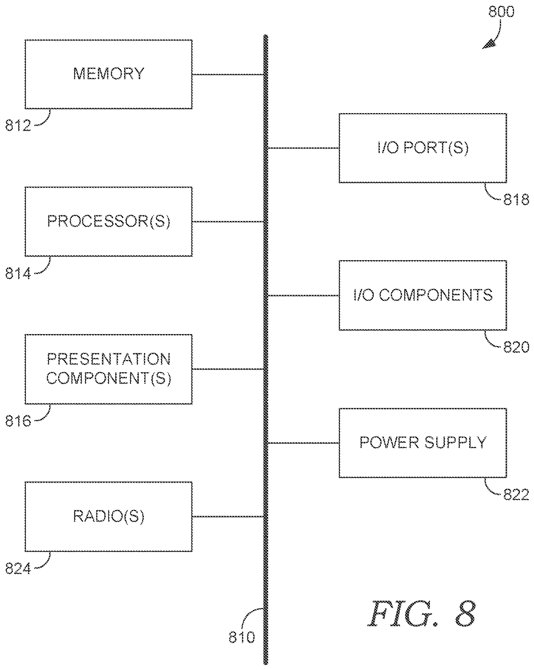

Among other components not shown, example operating environment 100 includes a network 102; a computing device 104 having a client interface component 106; search engine 108 having a query module 110, a generative module 112, and a search module 114; keyword index 130; and item database 134. It should be understood that environment 100 shown in FIG. 1 is an example of one suitable operating environment. Each of the components shown in FIG. 1 may be implemented via any type of computing device, such as computing device 800, described below in connection to FIG. 8, for example.

These components may communicate with each other via the network 102, which may include, without limitation, one or more local area networks (LANs) and/or wide area networks (WANs). In exemplary implementations, the network 102 comprises the Internet and/or a cellular network, amongst any of a variety of possible public and/or private networks. In aspects, the network 102 may include multiple networks, as well as being a network of networks, but is shown in more simple form so as to not obscure other aspects of the present disclosure.

It should be understood that any number of user devices, servers, and data sources may be employed within the operating environment 100 within the scope of the present disclosure. Each may comprise a single device or multiple devices cooperating in a distributed environment. For instance, the search engine 108 may be provided via multiple devices arranged in a distributed environment that collectively provide the functionality described herein. Additionally, other components not shown may also be included within the distributed environment.

The computing device 104 can be a client device on the client-side of the operating environment 100, while the search engine 108 can be on the server-side of operating environment 100. For example, the search engine 108 can comprise server-side software designed to work in conjunction with client-side software on the computing device 104 so as to implement any combination of the features and functionalities discussed in the present disclosure. This division of the operating environment 100 is provided to illustrate one example of a suitable environment, and there is no requirement for each implementation that any combination of the search engine 108 and the computing device 104 remain as separate entities. While the operating environment 100 illustrates a configuration in a networked environment with a separate computing device, search engine, keyword index, and item database, it should be understood that other configurations can be employed in which components are combined. For instance, in some configurations, a computing device may also serve as a data source and/or may provide search capabilities.

The computing device 104 may comprise any type of computing device capable of use by a user. For example, in one aspect, the computing device 104 may be the type of computing device 800 described in relation to FIG. 8 herein. By way of example and not limitation, a computing device may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where search queries may be performed via the client interface component 106 or where notifications can be presented via the client interface component 106. A user may be associated with the computing device 104. The user may communicate with the search engine 108 through one or more computing devices, such as the computing device 104.

At a high level, the search engine 108 receives a text-based search query (e.g., a natural language query or structured query) or an audio query comprising voice or other audio input from the computing device 104 (or another computing device not depicted). In aspects, the text-based query or the audio query comprises one or more keywords. The search query may comprise any type of input from a user for initiating a search comprising one or more keywords. In response to receiving the search query, the search engine 108 generates and ranks text-based results in a single set of search results.

In some configurations, the search engine 108 may be embodied on one or more servers. In other configurations, the search engine 108 may be implemented at least partially or entirely on a user device, such as computing device 800 described in FIG. 8. The search engine 108 (and its components) may be embodied as a set of compiled computer instructions or functions, program modules, computer software services, or an arrangement of processes carried out on one or more computer systems.

As shown in FIG. 1, the search engine 108 includes the query module 110, the generative module 112, and the search module 114. In one aspect, the functions performed by modules of the search engine 108 are associated with one or more personal assistant applications, services, or routines. In particular, such applications, services, or routines may operate on one or more user devices (such as computing device 104) or servers (e.g., the search engine 108), or may be distributed across one or more user devices and servers. In some aspects, the applications, services, or routines may be implemented in the cloud. Moreover, in some aspects, these modules of the search engine 108 may be distributed across a network, including one or more servers and client devices (such as computing device 104), in the cloud, or may reside on a user device such as computing device 104.

In addition, the modules of the search engine 108 and the functions and services performed by these modules may be implemented at appropriate abstraction layer(s) such as an operating system layer, an application layer, or a hardware layer, etc. Alternatively, or in addition, the functionality of these modules (or the aspects of the technology described herein) can be performed, at least in part, by one or more hardware logic components. For instance, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Further, although functionality is described herein with regards to specific modules shown in search engine 108, it is contemplated that in some aspects, functionality of one of the modules can be shared or distributed across other modules.

The query module 110 receives a search query comprising one or more text-based keywords. For example, a user may input a search query at computing device 104 via a client interface component 106 that provides access to a search engine. As previously mentioned, the search query may comprise any type of input from a user for initiating a search comprising one or more keywords.

The query module 110 may be configured to receive the search. The query module 110 may be configured to classify the query as an intent-based query or a product-based query. To do so, the query module 110 may employ a machine learning model (e.g., a classification model). The classification model is trained to determine whether the search query is a product-based query or an intent-based query. For example, the classification model may trained to identify words that are characteristic of a user searching for items to perform a task. Additionally, or alternatively, the classification model may be trained to classify the search query based on knowledge learned from user feedback.

The query module 110 may also be configured to determine if the initial search query is a cached query (regardless of whether it is a product-based query or an intent-based query). For example the query module 110 may initially search the search logs, described below. If the initial search query is a cached query, the query module 110 can quickly retrieve search results or a list of items corresponding to a task, while preserving resources for other search queries that are not cached.

Additionally, the query module 110 may be configured to communicate the search query or a selection of items of a list of items corresponding to a task, to other modules of search engine 108, such as the generative module 112 or search module 114, for example. For example, if the query module 110 determines the search query is an intent-based query, the query module 110 may communicate the search query to the generative module 112. Further, the user query module 110 may be configured to transmit the search results for the search query, a list of items corresponding to a task, or item listings associated with the search query or the task, to computing devices, such as computing device 104.

Continuing the example, the query module 110 may cause one or more graphical user interface displays of various computing devices to display the search query, a list of items corresponding to a task, or item listings associated with the search query or the task. In aspects, query module 110 causes the client interface component 106, through which the search query is input (e.g., by a user in a search tool on a web page), to display the search query, a list of items corresponding to a task, or item listings associated with the search query or the task. Further, the query module 110 may comprise an Application Program Interface (API) that allows applications to submit the search query (and optionally other information, such as user information, contextual information, and the like) for receipt by the search engine 108.

The generative module 112 utilizes a machine learning model to generate a list of items corresponding to a task. The task may be readily apparent based on one or more words of the search query. In some aspects, the generative module 112 identifies or generates the task based on the one or more words of the search query. The generative module 112 comprises any type of generative AI model that uses neural networks to identify patterns and structures within existing data (e.g., the search query) to generate new and original content (e.g., a list of items corresponding to a task or the task itself). Although described as a single machine learning model, the generative module 112 may be a series of machine learning models working together to generate the list of items or the task.

The search module 114 identifies search results in response to search queries processed against item database 134, which is described in more detail below. For example, the search module 114 may query the keyword index 130 to identify results that satisfy criteria of the search query or the list of items corresponding to the task. In some aspects, the results identified in the keyword index 130 are mapped to items in the item database 134. For clarity, an item may be an item listing for a product and may include a variety of additional information, such as price, price range, quality, condition, ranking, material, brand, manufacturer, etc.

The search module 114 also ranks the search results. In some aspects, information learned from historical search sessions or user feedback is utilized to optimize the ranking of the search results. For example, selections made by other users submitting similar queries may be leveraged to increase or decrease the ranking of individual items within the search results.

In some aspects, feedback may be stored in search logs. The search logs may be embodied on a plurality of databases, wherein one or more of the databases comprise one or more hardware components that are part of the search engine 108. In aspects, the search log are configured for storing information regarding historical search sessions for users, including, for instance, search queries submitted by a plurality of users via client interface components (e.g., client interface component 106), a list of items corresponding to a task defined by the historical search queries, search results associated with the historical search queries and/or the task, item listings for the search results, or user interactions (e.g., hovers, click-throughs, purchases, etc.) associated with the search results. In some embodiments, the search logs store a timestamp (e.g., day, hour, minute, second, etc.) for each user query, search result, list of items corresponding to a task, item listing associated with the search result and/or the task, user interaction with the search result and/or the list of items corresponding to the task, and so forth.

In addition, the information stored in search logs regarding historical search sessions may include other result selection information, such as subsequent filters selected in response to receiving search results, a list of items corresponding to a task, and item listings. In some embodiments, result selection information may include the time between two successive selections of search results, the language employed by the user, and the country where the user is likely located (e.g., based on a server used to access the search engine 108). In some implementations, other information associated with the historical search sessions that is stored may comprise user interactions with a ranking displayed within an item listing, negative feedback displayed with the item listing or a list of items corresponding to a task, and other information such as whether the user clicked or viewed a document associated with an item listing User information including user cookies, cookie age, IP (Internet Protocol) address, user agent of the browser, and so forth, may also be stored in search logs. In some embodiments, the user information is recorded in the search logs for an entire user session or multiple user sessions.

The keyword index 130 and item database 134 may comprise data sources or data systems, which are configured to make data available to any of the various constituents of operating environment 100. The keyword index 130 and item database 134 may be discrete components separate from search engine 108 or may be incorporated or integrated into the search engine 108 or other components the operating environment 100. Among other things, item database 134 can store search results associated with search queries about which information can be indexed in keyword index 130.

The keyword index 130 can take the form of an inverted index, but other forms are possible. The keyword index 130 stores the information about items in a manner that allows the search engine 108 to efficiently identify search results for a search query. The search engine 108 can be configured to run any number of queries on the keyword index 130. The keyword index 130, according to an example embodiment, may include an inverted index storing a mapping from textual search queries to items in item database 134.

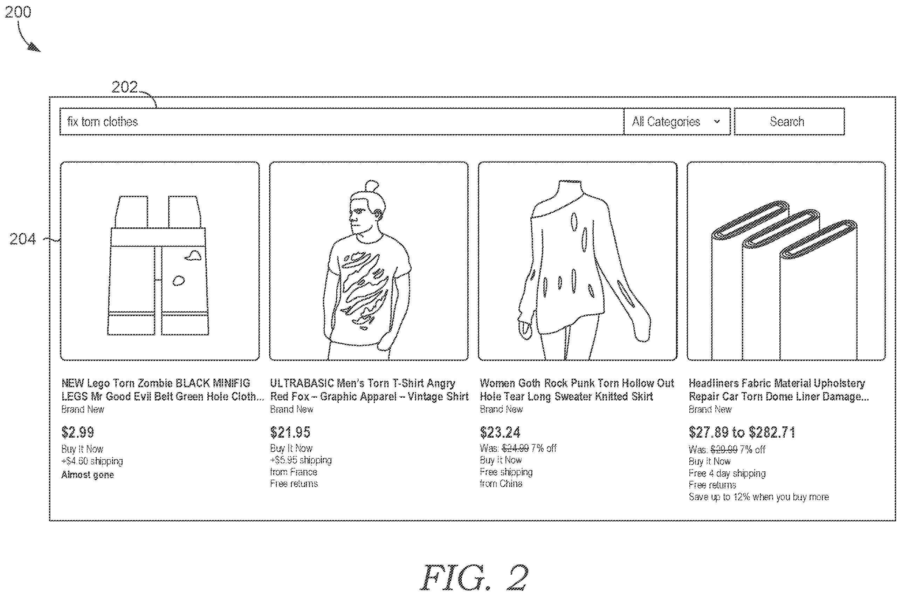

In practice, and turning now to FIGS. 2-5, example user interfaces 200, 300, 400, 500 illustrate various search results. For example, FIG. 2 is an example user interface 200 showing search results before the search system leverages generative AI. As illustrated, a user of a site submits a search query 202 comprising the terms "fix torn clothes." Because the search system is unable to understand the intent of the user, the search system returns results 204 that include items (e.g., clothes) available within the e-commerce site. However, in this example, the user is searching for items to actually fix torn clothes (e.g., iron-on patches, fabric glue, sewing kit, fabric tape, etc.) and the results provided are not helpful.

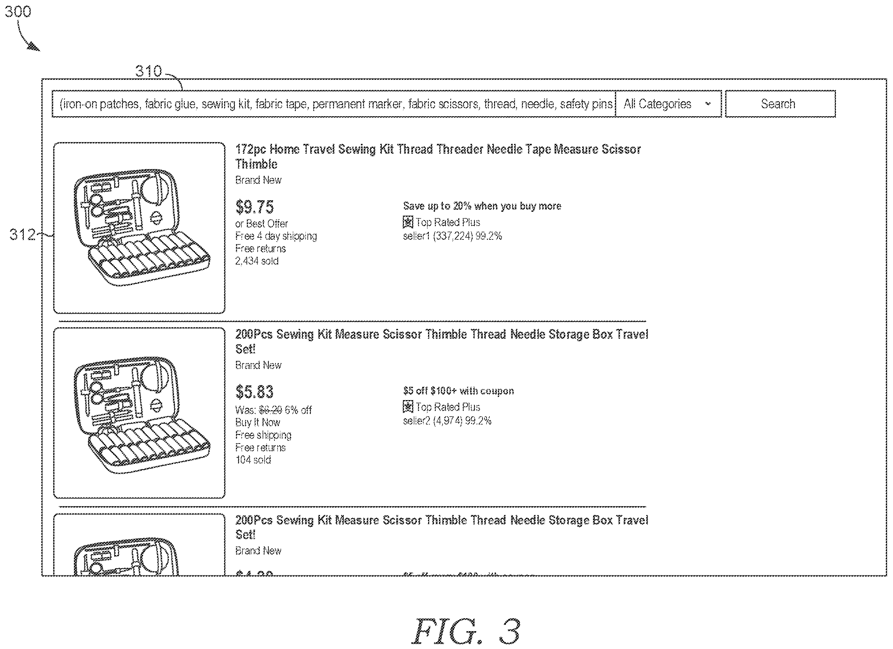

Referring to FIG. 3, an example user interface 300 illustrates search results after the search system leverages generative AI, according to an aspect of the technology described herein. In this example, the user of the site also submits a search query (not shown in FIG. 3) comprising the terms "fix torn clothes." However, in this case, the search system leverages generative AI to provide a list of items corresponding to a task 310. As shown, the search results (e.g., iron-on patches, fabric glue, sewing kit, fabric tape, etc.) 312 will actually enable the user to fix torn clothes and are very helpful.

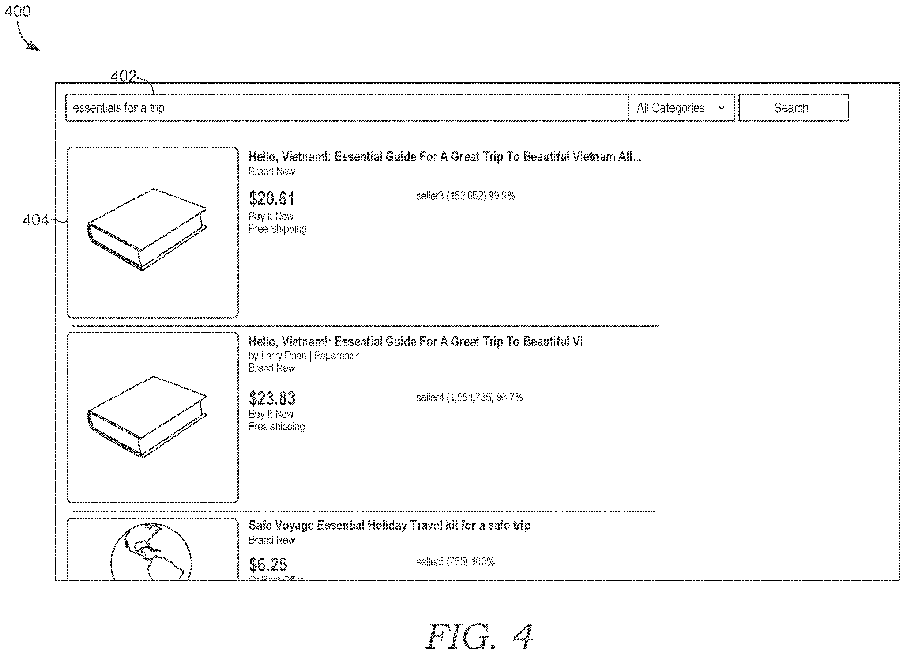

In another example, and referring now to FIG. 4, an example user interface 400 illustrates search results before the search system leverages generative Al. As illustrated, the user submits a query 402 comprising the terms "essentials for a trip." Because the search system is unable to understand the intent of the user, the search system returns results 404 for items available within the site with a title or description matching the search terms (e.g., a book with the terms "essential," "for a," and "trip" in the title or description). However, in this example, the user is searching for items needed for a trip (e.g., backpack, sleeping bag, sunscreen, camera, etc.) and, again, the results provided are not helpful.

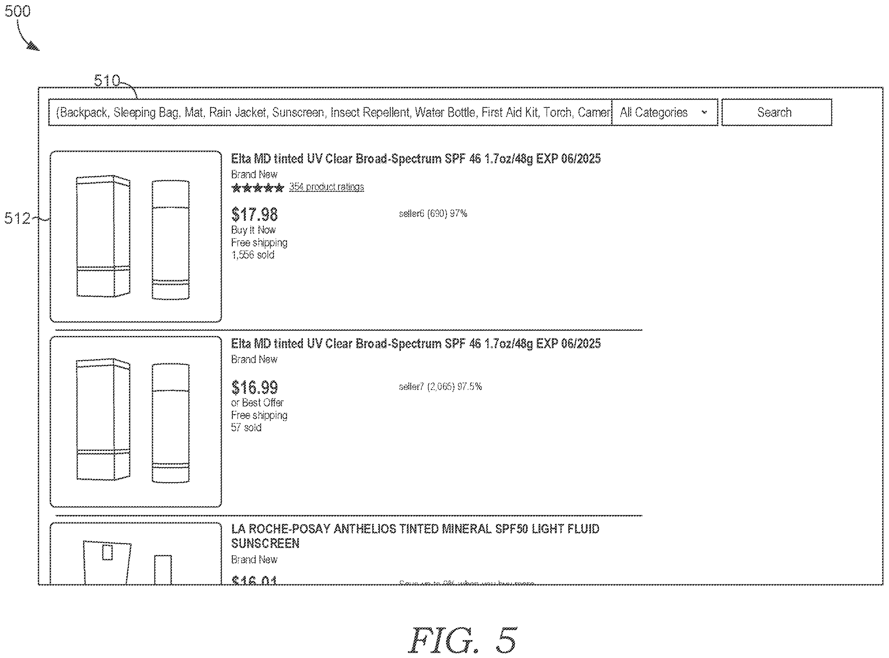

Referring to FIG. 5, an example user interface 500 illustrates search results after the search system leverages generative AI, according to an aspect of the technology described herein. In this example, the user of the site also submits a search query comprising the terms "essentials for a trip." However, in this case, the search system leverages generative AI to provide a list of items corresponding to a task 510. As shown, the search results (e.g., backpack, sleeping bag, sunscreen, camera, etc.) 512 will actually enable the user to purchase essential items for a trip and are very helpful.

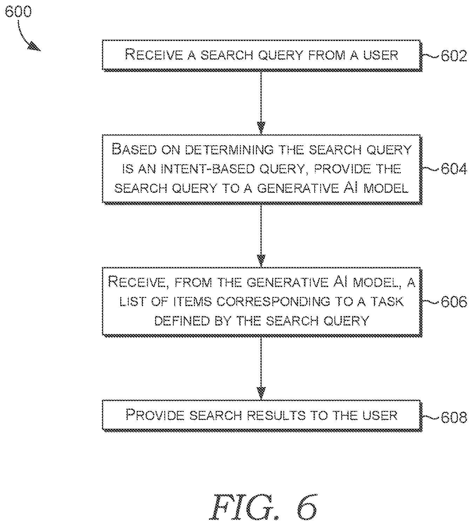

FIG. 6 is a flow diagram showing a method 600 for leveraging generative AI to identify products for completing a task, in accordance with an aspect of the technology described herein. The method 600 may be performed, for instance, by the search engine 108 of FIG. 1. As shown at block 602, a search query is initially received from a user. The search query may comprise one or more text-based keywords. In aspects, the search query may be received at search engine 108 from computing device 104 via client interface component 106 of FIG. 1.

In aspects, the search query is classified as a product-based query (i.e., the user is searching for a particular product) or an intent-based query (i.e., the user is searching for items to complete a task). Additionally or alternatively, the search query may be determined to not be a cached query. If the search query is a cached query, it may be more resource-friendly to provide results corresponding to the cached query than leveraging generative AI. Likewise, if the search query is a product-based query, there is no need to leverage generative AI because the user has already directed the search towards a particular item or product.

At block 604, based on determining the search query is an intent-based query, the search query is provided to a generative AI model. In some aspects, the task defined by the search query is identified by one or more components of search engine (e.g., query module 112 or generative module 112). For example, the task may be readily apparent based on the one or more words of the initial search query. In some aspects, the generative AI model identifies or generates the task based on the one or more words of the initial search query. The generative AI model generates a list of items corresponding to the task. Continuing the first example above, the query may be "fix torn clothes." The task identified by the query may be "fix torn clothes" or the generative AI model may identify or generate the task "items to help fix torn clothes" based on the one or more words of the initial search query. Accordingly, the generative AI model may generate a list of items that are helpful to fix torn clothes (e.g., iron-on patches, fabric glue, sewing kit, fabric tape, etc.).

Continuing the second example above, the query may be "essentials for a trip." The task identified by the query may be "essentials for a trip" or the generative AI model may identify or generate the task "items that are useful to pack for a trip" based on the one or more words of the initial search query. Accordingly, the generative AI model generates a list of items that are useful to pack for a trip (e.g., backpack, sleeping bag, sunscreen, camera, etc.). In aspects, the availability of items of the list of items is initially confirmed to be available in an inventory prior to providing the list of items to the user or executing a search for the items.

At block 606, a list of items corresponding to the task defined by the search query is received from the generative AI model. In various aspects, the user is provided several options. A first option may be to execute a search for the original search query and ignore the list of items generated by the generative AI model. A second option may be to execute the search for the list of items generated by the generative AI model. A third option may be that the list of items corresponding to the task defined by the search query is provided as a search suggestion for the user. In this option, a selection of a portion of items of the list of items may be received from the user. Based on the selection, a search is executed for the portion of items. A fourth option may enable the user to add additional items to the list of items or the portion of items prior to executing the search. At block 608, search results are provided to the user.

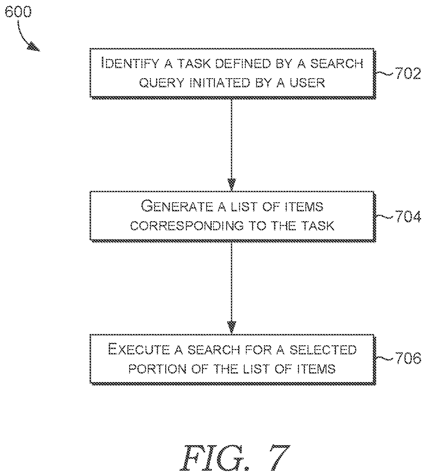

FIG. 7 is a flow diagram showing a method 700 for leveraging generative artificial intelligence (Al) to identify products for completing a task, in accordance with an aspect of the technology described herein. The method 700 may be performed, for instance, by the search engine 108 of FIG. 1. In aspects, a search query may be received at a search engine 108 from computing device 104 via client interface component 106 of FIG. 1. The search query may comprise one or more text-based keywords.

As shown at block 702, a task defined by the search query initiated by a user is identified. If the search query is an intent-based query, the task may be identified using all or a portion of the one or more text-based keywords. Although not shown, a first machine learning model (e.g., a classification model) may initially be utilized to determine whether the search query is a product-based query or an intent-based query. In some aspects, if the initial search query is an intent-based query, it is provided to a second machine learning model. In other aspects, if the initial search query is a cached query (regardless of whether it is a product-based query or an intent-based query), it is not provided to the second machine learning model to preserve resources. The task may be readily apparent based on the one or more words of the initial search query. In some aspects, the generative second machine learning model identifies or generates the task based on the one or more words of the initial search query.

At block 704, the second machine learning model (e.g., a generative AI model) may be utilized to generate a list of items corresponding to the task. By way of example, assume the search query is "things to put on top of dining table." The first machine learning model may determine the search query is an intent-based query. Accordingly, the intent-based query is provided to the second machine learning model. The second machine learning model may generate a list of items corresponding to "things to put on top of dining table." In some aspects, the second machine learning model may first identify or generate text corresponding to a task defined by the initial search query. For example, the second machine learning may identify or generate the task "items that can be used to decorate a dining room table." Based on the task, the second machine learning model may generate a list of items such as "a centerpiece," "a candle holder," "fresh flowers," and the like, that will be useful to the user to complete the task.

In another example, assume the search query is "materials to build stone water fountain." The first machine learning model may determine the search query is an intent-based query. Accordingly, the intent-based query is provided to the second machine learning model. The second machine learning model may generate a list of items corresponding to "materials to build stone water fountain." In some aspects, the second machine learning model may first identify or generate text corresponding to a task defined by the initial search query. For example, the second machine learning may identify or generate the task "materials needed to build a stone water fountain." Based on the task, the second machine learning model may generate a list of items such as "a fountain basin," "a fountain pump," "accessory rocks," and the like, that will be useful to the user to complete the task.

At block 706, a search for a selected portion of the list of items is executed.

With reference to FIG. 8, computing device 800 includes a bus 810 that directly or indirectly couples the following devices: memory 812, one or more processors 814, one or more presentation components 816, one or more input/output (I/O) ports 818, one or more I/O components 820, and an illustrative power supply 822. Bus 810 represents what may be one or more busses (such as an address bus, data bus, or combination thereof). Although the various blocks of FIG. 8 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 8 is merely illustrative of an exemplary computing device that can be used in connection with one or more aspects of the present technology. Distinction is not made between such categories as "workstation," "server," "laptop," "handheld device," etc., as all are contemplated within the scope of FIG. 8 and with reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer-storage media and communication media.

Computer-storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 800. Computer storage media does not comprise signals per se.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors 814 that read data from various entities such as memory 812 or I/O components 820. Presentation component(s) 816 presents data indications to a user or other device. Exemplary presentation components include a display device, speaker, printing component, vibrating component, and the like.

The I/O ports 818 allow computing device 800 to be logically coupled to other devices, including I/O components 820, some of which may be built in. Illustrative components include a microphone, joystick, game pad, satellite dish, scanner, printer, wireless device, etc.

The I/O components 820 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 800. The computing device 800 may be equipped with depth cameras, such as stereoscopic camera systems, infrared camera systems, RGB camera systems, and combinations of these, for gesture detection and recognition. Additionally, the computing device 800 may be equipped with accelerometers or gyroscopes that enable detection of motion. The output of the accelerometers or gyroscopes may be provided to the display of the computing device 800 to render immersive augmented reality or virtual reality.

Some aspects of computing device 800 may include one or more radio(s) 824 (or similar wireless communication components). The radio 824 transmits and receives radio or wireless communications. The computing device 800 may be a wireless terminal adapted to receive communications and media over various wireless networks. Computing device 800 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi^{®} connection to a device (e.g., mobile hotspot) that provides access to a wireless communications network, such as a WLAN connection using the 802.11 protocol; a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

## Claims

1. A method of leveraging generative artificial intelligence (AI) to identify products for completing a task, the method comprising:
receiving a search query from a user;
based on determining the search query is an intent-based query, providing the search query to a generative AI model;
receiving, from the generative AI model, a list of items corresponding to a task defined by the search query; and
providing search results to the user.

2. The method of claim 1, further comprising:
providing the list of items corresponding to the task defined by the search query as a search suggestion for the user;
receiving, from the user, a selection of a portion of items of the list of items; and
based on the selection, executing a search for the portion of items.

3. The method of claim 1 or 2, further comprising classifying the search query as a product-based query or an intent-based query;
wherein the method may further comprise:
determining available items of the portion of items that are available in an inventory; and
executing the search for portion of items that are available in the inventory.

4. The method of any one of the preceding claims, further comprising providing an option for the user to execute a search for the search query or the search for the list of items corresponding to a task defined by the search query.

5. The method of any one of the preceding claims, further comprising determining the search query is not a cached query; and/or identifying the task defined by the search query.

6. The method of any one of the preceding claims, further comprising enabling the user to add additional items to the portion of items prior to executing the search.

7. One or more, optionally non-transitory, computer storage media storing computer-readable instructions that when executed by a processor, cause the processor to perform operations, the operations comprising:
identifying a task defined by a search query initiated by a user;
utilizing a machine learning model to generate a list of items corresponding to the task; and
executing a search for a selected portion of the list of items.

8. The one or more computer storage media of claim 7, determining the search query is not a cached query.

9. The one or more computer storage media of claim 7 or 8, further comprising classifying the search query as a product-based query or an intent-based query, and optionally providing the search query to the machine learning model.

10. The one or more computer storage media of any one of claims 7 to 9, further comprising determining available items of the selected portion of the list of items that are available in an inventory.

11. The one or more computer storage media of any one of claims 7 to 10, further comprising providing an option for the user to execute the search for the selected portion of the list of items or add additional items to the at least a portion of the list of items corresponding to the task prior to executing the search.

12. A system for leveraging generative artificial intelligence (AI) to identify products for completing a task, the system comprising:
at least one processor; and
one or more computer storage media storing computer-readable instructions that when executed by the at least one processor, cause the at least one processor to perform operations comprising:
receiving a search query from a user;
providing the search query to a generative AI model;
receiving, from the generative AI model, a list of items corresponding to a task defined by the search query; and
providing search results to the user, the search results comprising at least a portion of the list of items corresponding to the task.

13. The system of claim 12, further comprising providing the list of items corresponding to the task defined by the search query as a search suggestion for the user.

14. The system of claim 12 or 13, further comprising receiving, from the user, a selection of the portion of items of the list of items, and optionally, based on the selection, executing a search for the selection of the portion of items.

15. The system of any one of claims 12 to 14, further comprising providing an option for the user to execute the search for at least the portion of the list of items corresponding to a task defined by the search query or add additional items to the at least a portion of the list of items corresponding to the task prior to executing the search;
wherein the operations may further comprise identifying the task defined by the search query.
